# EUROPÄISCHE PATENTSCHRIFT

(11) **EP 2 025 141 B1**
(45) Veröffentlichungstag und Bekanntmachung des Hinweises auf die Patenterteilung: **13.02.2019**
(21) Anmeldenummer: 07729444.5
(22) Anmeldetag: 23.05.2007
(51) Int. Cl.: H04M 3/54, H04M 7/12, H04W 4/16, H04M 3/42

(54) **VERFAHREN ZUM WEITERLEITEN EINER NACHRICHT SOWIE RECHNEREINHEIT UND KOMMUNIKATIONSSYSTEM**
METHOD FOR FORWARDING A MESSAGE, COMPUTER UNIT, AND COMMUNICATION SYSTEM
PROCÉDÉ D'ACHEMINEMENT D'UN MESSAGE, UNITÉ DE CALCUL ET SYSTÈME DE COMMUNICATION

(30) Priorität: 31.05.2006 DE 102006025415
(43) Veröffentlichungstag der Anmeldung: 18.02.2009
(73) Patentinhaber: Vodafone GmbH, 40549 Düsseldorf (DE)
(72) Erfinder: HAIGES, Sven, 85622 Feldkirchen (DE); LANG, Thomas, 81667 München (DE); BARKER, Ronald, 81379 München (DE)
(74) Vertreter: Müller & Schubert
(86) Internationale Anmeldenummer: PCT/EP2007/055007
(87) Internationale Veröffentlichungsnummer: WO 2007/137979

(56) Entgegenhaltungen:
- EP-A- 0 841 797
- WO-A-2004/107785
- WO-A-2005/081553
- WO-A-2007/056158
- WO-A-2007/065425
- US-A1- 2005 096 029

## Beschreibung

Die vorliegende Erfindung betrifft zunächst ein Verfahren zum Weiterleiten einer Nachricht, insbesondere eines Anrufs, eines ersten Teilnehmers zu einem zweiten Teilnehmer gemäß dem Oberbegriff von Patentanspruch 1. Weiterhin betrifft die Erfindung eine Rechnereinheit innerhalb eines Telekommunikationsnetzes, insbesondere eines Mobilfunknetzes, zum Weiterleiten einer Nachricht, insbesondere eines Anrufs, eines ersten Teilnehmers zu einem zweiten Teilnehmer. Schließlich betrifft die Erfindung auch ein Kommunikationssystem zum Weiterleiten einer Nachricht, insbesondere eines Anrufs, eines ersten Teilnehmers zu einem zweiten Teilnehmer.

Aus dem allgemeinen Stand der Technik ist bereits seit langem die Möglichkeit bekannt, eingehende Telefonanrufe per Rufumleitung auf einen anderen Telefonapparat umzuleiten. Beispielsweise ist es bei einem Festnetzanschluss möglich, im angeschlossenen Telefonapparat oder einer davor geschalteten Telefonanlage eine entsprechende Rufnummer für eine Rufumleitung einzuprogrammieren. Wird nun der besagte Festnetzanschluss angewählt, wird der Telefonanruf automatisch an die einprogrammierte Rufnummer weitergeleitet. Dabei ist es auch möglich, eingehende Telefonanrufe vom Festnetz an eine Mobilfunknummer eines in einem Mobilfunknetz registrierten Mobiltelefons weiterzuleiten.

Diese bekannte Technologie lässt sich jedoch nicht ohne weiteres auf andere Kommunikationsformen anwenden. In den letzten Jahren hat die Mobiltelefonie erheblich an Bedeutung gewonnen. Auch hat sich in den letzten Jahren die IP-Telefonie immer mehr durchgesetzt. Bei der IP-Telefonie, die auch als Internet-Telefonie oder Voice over IP (VOIP)-Telefonie bezeichnet wird, handelt es sich generell um das Telefonieren über ein Computernetzwerk auf der Grundlage des Internetprotokolls (IP). Da Sprachsignale digitalisiert werden können ist es möglich, diese digitalisierten Signale über das Internet oder generell über ein Computernetz von einem Teilnehmer zu einem anderen Teilnehmer zu übertragen.

VOIP-Anschlüsse verfügen normalerweise nicht über eine Telefonnummer. Vielmehr werden hier so genannte SIP-Adressen (Session Initiation Protocol) verwendet, die allgemein das Format "user@anbieter.de" haben. Dadurch können diese Teilnehmer nur schwer beziehungsweise gar nicht über eine Telefon-Tastatur erreicht werden.

In der WO 2005/081553 A1 ist eine Lösung beschrieben, bei der ein erster Teilnehmer aus einem Telekommunikationsnetz einen Anruf zu einem zweiten Teilnehmer initiiert, der an ein Gateway vermittelt und dort zunächst gehalten wird. Das Gateway fragt in der Zwischenzeit eine Datenbank ab, ob ein Endgerät des zweiten Teilnehmers in einem Computernetz verfügbar ist. Ist dies der Fall, wird der Anruf in das Computernetz signalisiert. Andernfalls wird der Anruf zu einem anderen Endgerät des zweiten Teilnehmers durchgestellt, welches sich in demjenigen Telekommunikationsnetz befindet, in dem sich auch das Endgerät des anrufenden ersten Teilnehmers befindet.

In der US 2005/0096029 A1 ist eine Lösung offenbart, bei der ein erster Teilnehmer in Abhängigkeit des Datentyps oder anderer gesetzter Einstellungen Daten an unterschiedliche Nummern schicken kann.

Basierend auf dem allgemeinen Stand der Technik liegt der vorliegenden Erfindung die Aufgabe zugrunde, eine Lösung bereitzustellen, mittels derer ein Teilnehmer in unterschiedlichen Kommunikationsnetzen erreicht werden kann. Insbesondere soll eine Möglichkeit bereitgestellt werden, mittels derer Teilnehmer der IP-Telefonie aus einem Telekommunikationsnetz, insbesondere einem Mobilfunknetz, erreicht werden können.

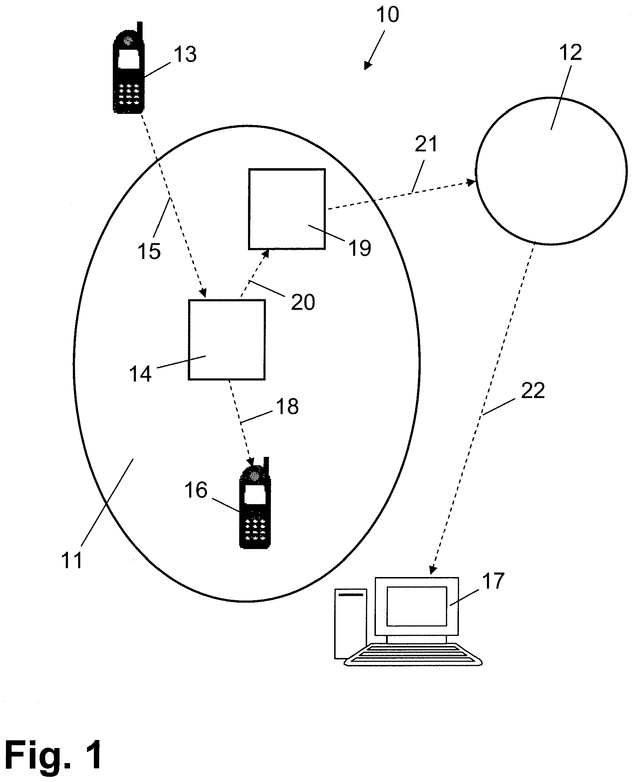

Diese Aufgabe wird erfindungsgemäß gelöst durch das Verfahren mit den Merkmalen gemäß dem unabhängigen Patentanspruch 1, der Rechnereinheit mit den Merkmalen gemäß dem unabhängigen Patentanspruch 5 sowie das Kommunikationssystem mit den Merkmalen gemäß dem unabhängigen Patentanspruch 7. Weitere Merkmale und Details der Erfindung ergeben sich aus den Unteransprüchen, der Beschreibung sowie der Zeichnung. Dabei gelten Merkmale und Details, die im Zusammenhang mit dem erfindungsgemäßen Verfahren beschrieben sind, selbstverständlich auch im Zusammenhang mit der erfindungsgemäßen Rechnereinheit sowie dem erfindungsgemäßen Kommunikationssystem. Merkmale und Details, die im Zusammenhang mit der erfindungsgemäßen Rechnereinheit beschrieben sind, gelten selbstverständlich auch im Zusammenhang mit dem erfindungsgemäßen Verfahren sowie dem erfindungsgemäßen Kommunikationssystem. Schließlich gelten Merkmale und Details, die im Zusammenhang mit dem erfindungsgemäßen Kommunikationssystem beschrieben sind, selbstverständlich auch im Zusammenhang mit der erfindungsgemäßen Rechnereinheit sowie dem erfindungsgemäßen Verfahren.

Gemäß dem ersten Aspekt der Erfindung wird ein Verfahren zum Weiterleiten einer Nachricht, insbesondere eines Anrufs, eines ersten Teilnehmers zu einem zweiten Teilnehmer bereitgestellt, welches die Merkmale des unabhängigen Patentanspruchs 1 aufweist.

Durch das erfindungsgemäße Verfahren wird es ermöglicht, dass der zweite Teilnehmer in unterschiedlichen Kommunikationsnetzen, in denen dieser registriert ist, erreicht werden kann. Insbesondere ist es möglich, Anrufe aus einem Telekommunikationsnetz, beispielsweise einem Mobilfunknetz, an Teilnehmer in einem Computernetz, weiterzuleiten. Mit dem erfindungsgemäßen Verfahren ist es insbesondere möglich, Voice over IP-Gespräche in Verbindung mit Mobilfunk durchzuführen. VOIP-Teilnehmer können nunmehr mit ganz normalen GSM/UMTS-Mobiltelefonen erreicht werden. GSM/UMTS-Teilnehmer können ihre Gespräche an VOIP-Geräten entgegennehmen.

Bei einem ersten Kommunikationsnetz handelt es sich um ein Telekommunikationsnetz, insbesondere ein Mobilfunknetz. Bei einem anderen Kommunikationsnetz handelt es sich um ein Computernetz auf der Grundlage des Internetprotokolls. Mittels des Computernetzes ist es insbesondere möglich, IP-Telefonie, etwa VOIP-Telefonie, durchzuführen.

In einem ersten Schritt wird die vom ersten Teilnehmer ausgehende Nachricht einer Rechnereinheit innerhalb eines Telekommunikationsnetzes, insbesondere eines Mobilfunknetzes, in dem der zweite Teilnehmer als Nutzer registriert ist, zugeleitet.

Bei einer Nachricht kann es sich im Rahmen der vorliegenden Erfindung beispielsweise um eine Sprachnachricht in Form eines Telefonanrufs handeln. Es sind jedoch auch andere Typen von Nachrichten, beispielsweise auf der Basis von Schriftdaten, etwa SMS oder dergleichen, auf der Basis von Bilddaten, etwa MMS oder dergleichen, und so weiter möglich. Es kann sich insbesondere um jede Form von insbesondere elektronischen Nachrichten handeln, die in einem einzelnen Kommunikationsnetz oder zwischen verschiedenen Kommunikationsnetzen übertragen werden können.

Innerhalb der Rechnereinheit erfolgt in einem nächsten Schritt eine Überprüfung, zu welchem Anschluss des zweiten Teilnehmers die Nachricht weitergeleitet werden soll. Bei der Überprüfung handelt es sich dabei um eine Art Adressierung beziehungsweise Auflösung der Adressierung.

Auf der Basis dieser Überprüfung wird die Nachricht innerhalb des Telekommunikationsnetzes an ein erstes Endgerät des zweiten Teilnehmers übertragen und/oder über ein der Rechnereinheit zugeordnetes Media-Gateway vom Telekommunikationsnetz zu zumindest einem anderen, in einem Computernetz befindlichen Anschluss des zweiten Teilnehmers signalisiert.

Unter einem Media-Gateway ist generell ein Rechner oder eine Schnittstelle zu verstehen, der/die Informationsdaten zwischen zwei verschiedenen Kommunikationsnetztypen vermittelt.

Um das erfindungsgemäße Verfahren durchzuführen ist insbesondere vorgesehen, dass sich der zweite Teilnehmer mit seinen Computernetz spezifischen Daten, beispielsweise seinen VOIP-Userdaten, beim Betreiber des Telekommunikationsnetzes registriert und anschließend die Weiterleitung einer Nachricht vom ersten Teilnehmer von seinem ersten Endgerät, etwa einem Mobiltelefon, auf seinen im Computernetz befindlichen Anschluss und über diesen beispielsweise an seinen Rechner, ein- und ausschalten kann.

In diesem Fall bucht sich das dem Telekommunikationsnetz zugeordnete Media-Gateway bei einem oder mehreren Computernetzbetreibern, beispielsweise VOIP-Anbietern, ein und signalisiert die im Telekommunikationsnetz eingehenden Anrufe zu den Computernetzanschlüssen, beispielsweise den VOIP-Anschlüssen.

Vorteilhaft ist dabei vorgesehen, dass der zweite Teilnehmer die dafür erforderlichen Nutzerdaten dem Telekommunikationsnetz zuvor zur Verfügung gestellt hat.

Die Rechnereinheit weist einen Application-Server auf, wobei die Überprüfung, zu welchem Anschluss des zweiten Teilnehmers die Nachricht weitergeleitet werden soll, im Application-Server erfolgt. Der Application-Server weist eine Schnittstelle, beispielsweise ein WAP-Interface auf, über die/das die Weiterleitungsmöglichkeit einund ausgeschaltet werden kann. Der Application-Server kann beispielsweise eine Web-Schnittstelle oder eine Funkschnittstelle zur Konfiguration aufweisen. Vorteilhaft ist vorgesehen, dass in einem Registrierungsschritt der zweite Teilnehmer zunächst Kennungsdaten seines zumindest einen in einem Computernetz befindlichen Anschlusses an die Rechnereinheit, insbesondere an den Application-Server, überträgt.

Der zweite Teilnehmer legt über eine Schnittstelle zur Rechnereinheit, insbesondere über eine Schnittstelle zum Application-Server, mittels eines Einstellvorgangs fest, zu welchem Anschluss oder zu welchen Anschlüssen des zweiten Teilnehmers die Nachricht weitergeleitet werden soll. Über diesen Einstellvorgang wird somit eingestellt, zu welcher Adresse die Nachricht weitergeleitet werden soll beziehungsweise, welches Ziel die Nachricht, beispielsweise ein Anruf, hat. Man könnte somit auch von einer Art Schaltvorgang sprechen.

Vorteilhaft kann der Einstellvorgang über eine Web-Schnittstelle oder eine Funk-Schnittstelle erfolgen. Der Einstellvorgang bildet in einem solchen Fall vorteilhaft eine Konfigurationsmöglichkeit, beispielsweise im Zusammenhang mit dem Anbieter, dem Nutzernamen, Passwörtern und dergleichen.

Vorteilhaft kann der Einstellvorgang über eine WAP-Schnittstelle oder mittels einer SMS oder mittels Shortcodes, und dergleichen erfolgen.

Die Auswahl des Anschlusses, zu welchem die Nachricht übertragen/signalisiert wird, erfolgt in der Rechnereinheit, insbesondere im Application-Server auf Basis definierter Parameter. Dabei ist die Erfindung natürlich nicht auf bestimmte Parametertypen beschränkt. Zur Verdeutlichung des Grundgedankens werden hierzu im Folgenden einige nicht ausschließliche Beispiele beschrieben. Beispielsweise kann die Auswahl in Abhängigkeit vom Ort erfolgen. Beispielsweise könnte in einem solchen Fall vorgesehen sein, dass eine eingehende Nachricht dann, wenn der zweite Teilnehmer zu Hause ist, an seinen Anschluss im Computernetz, beispielsweise auf seinen Rechner weitergeleitet wird, und dass eingehende Nachrichten dann, wenn der zweite Teilnehmer nicht zu Hause ist, auf sein Endgerät im Telekommunikationsnetz, beispielsweise sein Mobiltelefon, weitergeleitet werden. Natürlich könnte eine solche Auswahl auch zeitabhängig erfolgen, beispielsweise im Zusammenhang mit bestimmten Wochentagen, Uhrzeiten und dergleichen.

Die definierten Parameter sind über die Schnittstelle konfigurierbar.

Gemäß einem zweiten Aspekt wird eine Rechnereinheit innerhalb eines Telekommunikationsnetzes, insbesondere eines Mobilfunknetzes, zum Weiterleiten einer Nachricht, insbesondere eines Anrufs, eines ersten Teilnehmers zu einem zweiten Teilnehmer, bereitgestellt, welche die Merkmale des unabhängigen Patentanspruchs 5 aufweist.

Insbesondere weist die Rechnereinheit Mittel zur Durchführung des wie vorstehend beschriebenen erfindungsgemäßen Verfahrens auf, so dass alles bezüglich des Verfahrens gesagte auch auf die erfindungsgemäße Rechnereinheit anwendbar ist.

Beispielsweise kann vorgesehen sein, dass das Media-Gateway ein Bestandteil der Rechnereinheit ist. Ebenso ist es natürlich auch möglich, dass das Media-Gateway als von der Rechnereinheit eigenständige Einrichtung ausgebildet ist und dass die Rechnereinheit dann zumindest zeitweilig mit dem Media-Gateway kommuniziert.

Gemäß noch einem weiteren Aspekt wird ein Kommunikationssystem zum Weiterleiten einer Nachricht, insbesondere eines Anrufs, eines ersten Teilnehmers zu einem zweiten Teilnehmer bereitgestellt, welches die Merkmale des unabhängigen Patentanspruchs 7 aufweist.

Insbesondere weist das Kommunikationssystem Mittel zur Durchführung des wie vorstehend beschriebenen erfindungsgemäßen Verfahrens auf, so dass alles bezüglich des Verfahrens gesagte auch auf die erfindungsgemäße Rechnereinheit anwendbar ist.

Die Erfindung wird nun anhand eines Ausführungsbeispiels unter Bezugnahme auf die beiliegende Zeichnung näher beschrieben. Dabei ist in der einzigen Figur schematisch ein erfindungsgemäßes Kommunikationssystem dargestellt, mittels dessen das erfindungsgemäße Verfahren durchführbar ist.

In der Figur ist ein Kommunikationssystem 10 dargestellt, bestehend aus einem ersten Kommunikationsnetz 11, welches als Mobilfunknetz ausgebildet ist, und einem zweiten Kommunikationsnetz 12, welches als Computernetz ausgebildet ist. Über das Computernetz 12 soll es möglich sein, IP-Telefonie durchzuführen, insbesondere VOIP-Telefonie.

Eine von einem Endgerät 13, beispielsweise einem Mobiltelefon, eines ersten Teilnehmers ausgehende Nachricht für einen zweiten Teilnehmer, der über jeweils einen Anschluss im Telekommunikationsnetz 11 und im Computernetz 12 verfügt, wird zunächst einer Rechnereinheit 14 innerhalb des Telekommunikationsnetzes 11 zugeleitet. Der Übertragungsweg der Nachricht ist durch Pfeil 15 dargestellt. Im Telekommunikationsnetz 11 ist der zweite Teilnehmer mit einem Endgerät 16, beispielsweise einem Mobiltelefon, registriert. Bei der Rechnereinheit 14 kann es sich beispielsweise um einen so genannten Application-Server handeln.

Innerhalb der Rechnereinheit 14 erfolgt nun eine Überprüfung, zu welchem Anschluss des zweiten Teilnehmers die Nachricht weitergeleitet werden soll. Im dargestellten Beispiel besteht zunächst die Möglichkeit, die Nachricht auf das Endgerät 16 des zweiten Teilnehmers im Telekommunikationsnetz 11 zu übertragen. Es besteht jedoch auch die Möglichkeit, die Nachricht über das Computernetz 12 an einen weiteren Anschluss des zweiten Teilnehmers zu übertragen. An diesem Anschluss kann dann beispielsweise ein Rechner 17 des zweiten Teilnehmers angebunden sein.

Vor Nutzung des Verfahrens hat sich der zweite Teilnehmer vorteilhaft zunächst mit seinen Nutzerdaten betreffend das Computernetz 12, beispielsweise mit seinen VOIP-Nutzerdaten, beim Anbieter des Telekommunikationsnetzes 11 registriert und kann nun eine Weiterleitung der vom ersten Teilnehmer eingehenden Nachricht von seinem Endgerät 16 auf den Computernetzwerkanschluss und von dort auf den Rechner 17 ein- und ausschalten. Die entsprechenden Informationen sind vorteilhaft in der Rechnereinheit 14 abgelegt.

Je nach Einstellung wird auf Basis der in der Rechnereinheit 14 ablaufenden Überprüfung die Nachricht entweder auf das Endgerät 16 des zweiten Teilnehmers im Telekommunikationsnetz 11 übertragen, was durch den Pfeil 18 verdeutlicht ist. Es ist jedoch auch möglich, dass bei entsprechender Einstellung die Nachricht von der Rechnereinheit 14 über das Computernetz 12 zum Rechner 17 des zweiten Teilnehmers übertragen wird.

Dazu ist im Telekommunikationsnetz 11 ein so genanntes Media-Gateway 19 vorhanden. Das Media-Gateway 19 bucht sich im Computernetz 12 ein und signalisiert die vom ersten Teilnehmer eingehende Nachricht zum Anschluss des zweiten Teilnehmers im Computernetz 12 und damit zu dessen Rechner 17. Die Nachricht wird dann von der Rechnereinheit 14 über das Media-Gateway 19 ins Computernetz 12 und zum Rechner 17 des zweiten Teilnehmers übertragen, was durch die Pfeile 20, 21, 22 dargestellt ist.

Vorteilhaft kann vorgesehen sein, dass der zweite Teilnehmer über eine Schnittstelle zur Rechnereinheit 14 mittels eines Einstellvorgangs an seinem Endgerät 16 festlegt, zu welchem Anschluss oder zu welchen Anschlüssen des zweiten Teilnehmers die Nachricht weitergeleitet werden soll. Dabei kann der Einstellvorgang beispielsweise über eine Web-Schnittstelle oder eine Funk-Schnittstelle, etwa über eine WAP-Schnittstelle, mittels einer SMS, mittels Shortcodes oder dergleichen, erfolgen.

Die Auswahl des Anschlusses, zu welchem die Nachricht übertragen/signalisiert wird, erfolgt in der Rechnereinheit 14 vorteilhaft auf Basis definierter Parameter. Beispielsweise kann die Auswahl in Abhängigkeit vom Ort erfolgen. Beispielsweise könnte in einem solchen Fall vorgesehen sein, dass eine eingehende Nachricht dann, wenn der zweite Teilnehmer zu Hause ist, an seinen Anschluss im Computernetz 12, beispielsweise an seinen Rechner 17 weitergeleitet wird, und dass eingehende Nachrichten dann, wenn der zweite Teilnehmer nicht zu Hause ist, an sein Endgerät 16 im Telekommunikationsnetz 11, beispielsweise sein Mobiltelefon, weitergeleitet wird. Natürlich könnte eine solche Auswahl auch zeitabhängig erfolgen, beispielsweise im Zusammenhang mit bestimmten Wochentagen, Uhrzeiten und dergleichen.

Über das erfindungsgemäße Kommunikationssystem 10 ist es somit möglich, VOIP-Teilnehmer (im Beispiel der zweite Teilnehmer über seinen Rechner 17) mit ganz normalen GSM/UMTS-Mobiltelefonen 13 zu erreichen. Somit können GSM/UMTS-Teilnehmer (im Beispiel der zweite Teilnehmer) nunmehr auch Gespräche an ihren VOIP-Geräten (dem Rechner 17) entgegennehmen.

### Bezugszeichenliste

- 10: Kommunikationsnetz
- 11: Telekommunikationsnetz
- 12: Computernetz
- 13: Endgerät
- 14: Rechnereinheit
- 15: Übertragungsweg
- 16: Endgerät
- 17: Rechner
- 18: Übertragungsweg
- 19: Media-Gateway
- 20: Übertragungsweg
- 21: Übertragungsweg
- 22: Übertragungsweg

## Patentansprüche

1. Verfahren zum Weiterleiten einer Nachricht, insbesondere eines Anrufs, eines ersten Teilnehmers zu einem zweiten Teilnehmer, wobei der zweite Teilnehmer über jeweils einen Anschluss in einem Telekommunikationsnetz (11), insbesondere einem Mobilfunknetz, und in einem Computernetz (12) auf der Grundlage des Internetprotokolls verfügt, wobei es über das Computernetz (12) möglich ist, IP-Telefonie durchzuführen, mit folgenden Schritten:
a) Die vom ersten Teilnehmer ausgehende Nachricht wird einer einen Application-Server aufweisenden Rechnereinheit (14) innerhalb des Telekommunikationsnetzes (11), in dem der zweite Teilnehmer als Nutzer registriert ist, zugeleitet;
b) Innerhalb des Application-Servers erfolgt eine Überprüfung, zu welchem Anschluss des zweiten Teilnehmers die Nachricht weitergeleitet werden soll, wobei der zweite Teilnehmer über eine Schnittstelle zum Application-Server, über die eine Weiterleitungsmöglichkeit der Nachricht ein- und ausgeschaltet werden kann, mittels eines Einstellvorgangs festlegt, zu welchem Anschluss oder zu welchen Anschlüssen des zweiten Teilnehmers die Nachricht weitergeleitet werden soll, wobei die Auswahl des Anschlusses, zu welchem die Nachricht übertragen bzw. signalisiert wird, in der Rechnereinheit (14) auf Basis definierter Parameter, insbesondere in Abhängigkeit vom Ort oder der Zeit, erfolgt, welche über die Schnittstelle konfigurierbar sind;
c) Auf der Basis dieser Überprüfung wird die Nachricht innerhalb des Telekommunikationsnetzes (11) an ein erstes Endgerät (16) des zweiten Teilnehmers übertragen oder über ein der Rechnereinheit (14) zugeordnetes Media-Gateway (19) vom Telekommunikationsnetz (11) zu zumindest einem anderen, in einem Computernetz (12) befindlichen Anschluss des zweiten Teilnehmers signalisiert.

2. Verfahren nach Anspruch 1, **dadurch gekennzeichnet, dass** in einem Registrierungsschritt der zweite Teilnehmer Kennungsdaten seines zumindest einen in einem Computernetz (12) befindlichen Anschlusses an die Rechnereinheit (14), insbesondere an den Application-Server, überträgt.

3. Verfahren nach Anspruch 1, **dadurch gekennzeichnet, dass** der Einstellvorgang über eine Web-Schnittstelle oder eine Funk-Schnittstelle erfolgt.

4. Verfahren nach Anspruch 3, **dadurch gekennzeichnet, dass** der Einstellvorgang über eine WAP-Schnittstelle oder mittels einer SMS oder mittels Shortcodes erfolgt.

5. Rechnereinheit (14) innerhalb eines Telekommunikationsnetzes (11), insbesondere eines Mobilfunknetzes, zum Weiterleiten einer Nachricht, insbesondere eines Anrufs, eines ersten Teilnehmers zu einem zweiten Teilnehmer, wobei der zweite Teilnehmer über jeweils einen Anschluss in einem Telekommunikationsnetz (11), insbesondere einem Mobilfunknetz, und in einem Computernetz (12) auf der Grundlage des Internetprotokolls verfügt, wobei es über das Computernetz (12) möglich ist, IP-Telefonie durchzuführen, mit einem Application-Server mit zumindest einer Schnittstelle zum Empfangen einer von einem ersten Teilnehmer ausgehenden Nachricht, einer Überprüfungseinrichtung im Application-Server zum Überprüfen, zu welchem Anschluss des zweiten Teilnehmers die Nachricht weitergeleitet werden soll, mit einer Schnittstelle in der Rechnereinheit zum Übertragen der Nachricht an ein erstes Endgerät (16) des zweiten Teilnehmers innerhalb des Telekommunikationsnetzes (11), mit einer Schnittstelle im Application-Server, die so eingerichtet ist, dass darüber eine Weiterleitungsmöglichkeit der Nachricht ein- und ausgeschaltet werden kann, und dass darüber der zweite Teilnehmer mittels eines Einstellvorgangs festlegt, zu welchem Anschluss oder zu welchen Anschlüssen des zweiten Teilnehmers die Nachricht weitergeleitet werden soll, und mit Mitteln im Application-Server zur Auswahl des Anschlusses, zu welchem die Nachricht übertragen bzw. signalisiert wird, auf Basis definierter Parameter, insbesondere in Abhängigkeit vom Ort oder der Zeit, wobei die Schnittstelle, die so eingerichtet ist, dass darüber eine Weiterleitungsmöglichkeit der Nachricht ein- und ausgeschaltet werden kann, auch zur Konfiguration der definierten Parameter eingerichtet ist, und mit einer Schnittstelle in der Rechnereinheit zu einem Media-Gateway (19) oder mit einem Media-Gateway (19), welche(s) zum Signalisieren einer Nachricht vom Telekommunikationsnetz (11) zu zumindest einem anderen, in dem Computernetz (12) befindlichen Anschluss des zweiten Teilnehmers ausgebildet ist.

6. Rechnereinheit nach Anspruch 5, **dadurch gekennzeichnet, dass** diese Mittel zur Durchführung des Verfahrens nach einem der Ansprüche 1 bis 4 aufweist.

7. Kommunikationssystem (10) zum Weiterleiten einer Nachricht, insbesondere eines Anrufs, eines ersten Teilnehmers zu einem zweiten Teilnehmer, mit einem Telekommunikationsnetz (11), insbesondere einem Mobilfunknetz, in dem der zweite Teilnehmer als Nutzer registriert ist, und mit einem Computernetz (12) auf der Grundlage des Internetprotokolls, wobei der zweite Teilnehmer über jeweils einen Anschluss in dem Telekommunikationsnetz (11), insbesondere dem Mobilfunknetz, und in dem Computernetz (12) auf der Grundlage des Internetprotokolls verfügt, wobei es über das Computernetz (12) möglich ist, IP-Telefonie durchzuführen, und mit einer Rechnereinheit (14) nach Anspruch 5 oder 6.

8. Kommunikationssystem nach Anspruch 7, **dadurch gekennzeichnet, dass** dieses Mittel zur Durchführung des Verfahrens nach einem der Ansprüche 1 bis 4 aufweist.

## Claims

1. A method of forwarding a message, in particular a call, of a first subscriber to a second subscriber, wherein the second subscriber respectively has one connection in a telecommunications network (11), in particular in a mobile network, and one in a computer network (12) on the basis of the internet protocol, whereby it is possible to perform IP-telephony via said computer network (12), with the following steps:
a) The message originating from the first subscriber is transmitted to a computer unit (14) in the telecommunications network (11), in which the second subscriber is registered, said computer unit (14) comprising an application server;
b) In the application server, a check is made, to which connection of the second subscriber the message is to be forwarded, whereby the second subscriber sets, via an interface to the application server by means of which a forwarding-option for the message can get activated or deactivated, via a setting procedure, to which connection or to which connections of the second subscriber the message shall get forwarded, whereby the selecting of the connection, to which the message is forwarded or signalled, is made in the computer unit (14) on the basis of defined parameters, in particular in dependency of the location or of the time, which is configurable via said interface;
c) On the basis of this check, the message is transmitted in the telecommunications network (11) to a first terminal (16) of the second subscriber, or is signalled, via a media gateway (19) associated to said computer unit (14), from the telecommunications network (11) to at least one other connection in the computer network (12) of the second subscriber.

2. The method according to claim 1, **characterized in that** in a registration step the second subscriber transmits identification data of his at least one connection located in a computer network (12) to the computer unit (14), in particular to said application server.

3. The method according to claim 1, **characterized in that** the setting procedure is performed via a WAP-interface or via a radio-interface.

4. The method according to claim 3, **characterized in that** the setting procedure is performed via a WAP-interface or by means of an SMS or by means of short-codes.

5. A computing unit (14) in a telecommunications network (11), in particular a mobile network, for forwarding a message, in particular a call, of a first subscriber to a second subscriber, whereby the second subscriber respectively has one connection in a telecommunications network (11), in particular in a mobile network, and one in a computer network (12) on the basis of the internet protocol, whereby it is possible to perform IP-telephony via said computer network (12), with an application server with at least one interface for receiving a message originating from a first subscriber, a checking device in said application server for checking, to which connection of the second subscriber the message shall get forwarded, with an interface of the computing unit for transmitting the message to a first terminal (16) of the second subscriber in the telecommunications network (11), with an interface in said application server, which is provided as to activating and deactivating a forwarding-option for the message and that the second subscriber determines via said interface by means of a setting procedure, to which connection or to which connections of the second subscriber the message shall get forwarded, and with means in the application server for selecting the connection, to which the message is transmitted or signalled, on the basis of defined parameters, in particular in dependency of the location or of the time, whereby the interface, which is provided such, that a forwarding-option for the message can get activated or deactivated, is also provided for configuring the defined parameters, and with an interface in the computer unit to a media gateway (19) or with a media gateway (19), which is provided for signalling a message from the telecommunications network (11) to at least on other connection of the second subscriber in the computer network (12).

6. The computing unit according to claim 5, **characterized in that** it comprises means for performing the method according to anyone of claims 1 to 4.

7. A communications system (10) for forwarding a message, in particular a call, from a first subscriber to a second subscriber, with a telecommunications network (11), in particular a mobile network, in which the second subscriber is registered as a user, and with a computer network (12) on the basis of the internet protocol, whereby the second subscriber respectively has one connection in the telecommunications network (11), in particular in the mobile network, and one in the computer network (12) on the basis of the internet protocol, whereby it is possible to perform IP-telephony via said computer network (12), and with a computing unit (14) according to claim 5 or 6.

8. The communications system according to claim 7, **characterized in that** it comprises means for performing the method according to anyone of claims 1 to 4.

## Revendications

1. Procédé pour acheminer un message, en particulier un appel, d'un premier abonné à un second abonné, dans lequel le second abonné dispose d'un branchement à la fois dans un réseau de télécommunication (11), en particulier un réseau de radiocommunication mobile, et dans un réseau d'ordinateurs (12) sur la base du protocole Internet, dans lequel il est possible par le biais du réseau d'ordinateurs (12) d'exécuter une téléphonie IP, avec des étapes suivantes :
a) le message émanant du premier abonné est fourni à une unité de calcul (14), comportant un serveur d'applications, du réseau de télécommunication (11) dans lequel le second abonné est enregistré en tant qu'utilisateur ;
b) à l'intérieur du serveur d'applications est effectuée une vérification quant au branchement du second abonné auquel le message doit être acheminé, dans lequel le second abonné détermine par le biais d'une interface vers le serveur d'applications, par le biais de laquelle une possibilité d'acheminement du message peut être activée ou désactivée, au moyen d'une procédure de réglage vers quel branchement ou vers quels branchements du second abonné le message doit être acheminé, dans lequel la sélection du branchement, vers lequel le message est transmis ou signalisé, est effectuée dans l'unité de calcul (14) sur la base de paramètres définis, en particulier en fonction du lieu ou du moment, qui peuvent être configurés par le biais de l'interface ;
c) sur la base de cette vérification, le message est transmis à l'intérieur du réseau de télécommunication (11) à un premier appareil terminal (16) du second abonné ou est signalisé par le biais d'une passerelle multimédia (19) associée à l'unité de calcul (14) par le réseau de télécommunication (11) à au moins un autre branchement du second abonné se trouvant dans un réseau d'ordinateurs (12).

2. Procédé selon la revendication 1, **caractérisé en ce que**, dans une étape d'enregistrement, le second abonné transmet des données d'identification de son au moins un branchement se trouvant dans un réseau d'ordinateurs (12) à l'unité de calcul (14), en particulier au serveur d'applications.

3. Procédé selon la revendication 1, **caractérisé en ce que** la procédure de réglage est effectuée par le biais d'une interface Web ou d'une interface radio.

4. Procédé selon la revendication 3, **caractérisé en ce que** la procédure de réglage est effectuée par le biais d'une interface WAP ou au moyen d'un SMS ou au moyen d'un code abrégé.

5. Unité de calcul (14) à l'intérieur d'un réseau de télécommunication (11), en particulier d'un réseau de radiocommunication mobile, destinée à acheminer un message, en particulier un appel, d'un premier abonné à un second abonné, dans lequel le second abonné dispose d'un branchement à la fois dans un réseau de télécommunication (11), en particulier un réseau de radiocommunication mobile, et dans un réseau d'ordinateurs (12) sur la base du protocole Internet, dans lequel il est possible par le biais du réseau d'ordinateurs (12) d'exécuter une téléphonie IP, avec un serveur d'applications avec au moins une interface pour recevoir un message provenant d'un premier abonné, un dispositif de vérification dans le serveur d'applications pour vérifier vers quel branchement du second abonné le message doit être acheminé, avec une interface dans l'unité de calcul pour transmettre le message à un premier appareil terminal (16) du second abonné à l'intérieur du réseau de télécommunication (11), avec une interface dans le serveur d'applications, qui est conçue de sorte que, une possibilité d'acheminement du message peut être activée et désactivée par le biais de celle-ci et que le second abonné détermine par le biais de celle-ci au moyen d'une procédure de réglage vers quel branchement ou vers quels branchements du second abonné le message doit être acheminé, et avec un moyen dans le serveur d'applications pour sélectionner le branchement vers lequel le message est transmis ou signalisé, sur la base de paramètres définis, en particulier en fonction du lieu et du moment, dans lequel l'interface, qui est conçue de sorte qu'une possibilité d'acheminement du message peut être activée ou désactivée par le biais de celle-ci, est également conçue pour configurer les paramètres définis, et avec une interface dans l'unité de calcul à une passerelle multimédia (19) ou avec une passerelle multimédia (19), qui est formée pour signaliser un message du réseau de télécommunication (11) à au moins un autre branchement du second abonné se trouvant dans le réseau d'ordinateurs (12).

6. Unité de calcul selon la revendication 5, **caractérisé en ce que** celle-ci comprend un moyen pour exécuter le procédé selon l'une quelconque des revendications 1 à 4.

7. Système de communication (10) pour acheminer un message, en particulier un appel, d'un premier abonné à un second abonné, avec un réseau de télécommunication (11), en particulier un réseau de radiocommunication mobile, dans lequel le second abonné est enregistré en tant qu'utilisateur, et avec un réseau d'ordinateurs (12) sur la base du protocole Internet, dans lequel le second abonné dispose d'un branchement à la fois dans le réseau de télécommunication (11), en particulier le réseau de radiocommunication mobile, et dans le réseau d'ordinateurs (12) sur la base du protocole Internet, dans lequel il est possible par le biais du réseau d'ordinateurs (12) d'exécuter une téléphonie IP, et avec une unité de calcul (14) selon la revendication 5 ou 6.

8. Système de communication selon la revendication 7, **caractérisé en ce que** celui-ci comprend un moyen pour exécuter le procédé selon l'une quelconque des revendications 1 à 4.
